# EUROPEAN PATENT SPECIFICATION

(11) **EP 4 299 497 B1**
(45) Date of publication and mention of the grant of the patent: **04.06.2025**
(21) Application number: 23169995.0
(22) Date of filing: 26.04.2023
(51) Int. Cl.: B66B 1/24, B66B 1/46

(54) **ROBOTIC INTERLOCKING ELEVATOR CONTROL SYSTEM AND METHOD**
ROBOTISCHES INEINANDERGREIFENDES AUFZUGSSTEUERUNGSSYSTEM UND VERFAHREN
SYSTÈME ET PROCÉDÉ DE COMMANDE D'ASCENSEUR À VERROUILLAGE ROBOTIQUE

(30) Priority: 30.06.2022 KR 20220080673
(43) Date of publication of application: 03.01.2024
(73) Proprietor: Hyundai Elevator Co., Ltd., Chungju-si, Chungcheongbuk-do 27329 (KR)
(72) Inventor: DongHo, Kang, Chungju (KR); MoonSu, Kim, Chungju (KR); DongHyun, Kwon, Chungju (KR); Seok Kue, Lee, Chungju (KR)
(74) Representative: Baldus, Oliver

(56) References cited:
- JP-A- 2007 210 801
- US-A1- 2021 284 485
- US-A1- 2022 005 303

## Description

### TECHNICAL FIELD

The present invention relates to an interlocking control system between an elevator system and a robot, which provides countermeasures against failure modes generated in each step in the course of performing an elevator boarding/alighting procedure of the robot in movement of the robot between floors using the elevator in a building.

### BACKGROUND

In various buildings constructed for residential, business, and commercial purposes, elevators are installed for smooth movement of passengers between floors in the buildings.

Typically, the elevator includes an elevator car moving along a hoistway formed in a vertical direction inside a building, a mechanical part, which includes a motor for generating power for elevating the elevator car and a hoisting machine, a controller controlling operation of the elevator, and the like.

With recent activation of robot services in buildings, there is an increasing need to use elevators to move robots between floors in the building.

For example, various robots have been developed to carry out various tasks, such as transport, cleaning, and customer guidance while moving within a building. However, although commercially available robots in the art can move without difficulty in the horizontal direction in hallways or indoors with flat floors, there is a need for a means for moving the robots between floors to allow the robots to move from one floor to another floor in order to perform work on multiple floors.

Currently, the elevator is considered as the most desirable means for moving the robot between floors, and various interlocking control techniques between the robot and an elevator system are being developed in order to effectively move the robot to a destination floor.

Conventionally, the robot is controlled not to board the same elevator with humans in order to secure human safety. However, recently, as application of service robots in buildings has expanded, there have been many cases where robots and humans are required to board the same elevator.

Although there is a great need to prevent decrease in convenience or service quality for passengers due to robot services, it is not suitable to exclude the robot services, which are increasingly positively affecting real life, as optional services. Thus, there is a need for development of a harmonious interlocking control technology to improve elevator service quality for both humans and robots. US 2021/284485 A1 discloses robot interlocking elevator control system and method according to the preambles of claims 1 and 2, respectively.

### DISCLOSURE

### TECHNICAL PROBLEM

Movement of a robot between floors in a building through an elevator is carried out as a series of processes including a process in which the robot calls an elevator car, a process in which the robot board the elevator car that arrives at a departure floor and then moves to a destination floor, and a process in which the robot alights from the elevator car.

Here, the boarding/alighting procedure of the robot is carried out step by step while communication between the robot and the elevator controller controlling operation of the elevator is carried out, and details of the procedure are as follows.

When the robot remotely calls an elevator car, the elevator controller allocates a specific elevator car in response to the elevator call and moves the allocated elevator car to a departure floor.

When the elevator car arrives at the departure floor, the elevator controller opens the elevator door and sends a boarding permission signal to the robot to inform the robot that the robot can board the elevator car. In response to the boarding permission signal, the robot may start boarding operation with respect to the elevator car while informing the elevator controller that the robot is carrying out the boarding operation by continuously sending an under-boarding signal to the elevator controller until the robot completes the boarding operation. After completion of boarding on the elevator car, the robot sends a boarding completion signal to the elevator controller. Then, in response to the boarding completion signal from the robot, the elevator controller closes the elevator door to move the elevator car to the destination floor of the robot.

The alighting procedure of the robot with respect to the elevator car may be carried out in a similar way. When the elevator car receiving the robot reaches the destination floor, the elevator controller opens the elevator door and sends an alighting permission signal to the robot to inform the robot that the robot can alight from the elevator car. In response to the alighting permission signal, the robot may start alighting operation with respect to the elevator car while informing that the robot is carrying out the alighting operation by continuously sending an under-alighting signal to the elevator controller until the robot completes the alighting operation. After completion of alighting from the elevator car, the robot sends an alighting completion signal to the elevator controller. Then, in response to the alighting completion signal from the robot, the elevator controller closes the elevator door to allow the elevator car to provide another service.

On the other hand, while the above service procedure is carried out step by step, a failure mode can occur in each step. For example, upon arrival of the elevator car at the departure floor, there can be failure, such as absence of the robot on the platform or nonreception of a boarding/alighting signal from the robot. Conventionally, there are no specific countermeasures against such a failure mode and an elevator manager is allowed to take appropriate measures corresponding to situations upon occurrence of the failure mode.

In particular, conventionally, upon reception of an under-boarding or under-alighting signal, indicating that the robot performs boarding or alighting operation with respect to the elevator, from the robot, the elevator controller disables a door close button (DCB) of the elevator to perform door opening restriction until reception of a boarding completion or alighting completion from the robot. Thus, despite occurrence of failure for some reason in the course of performing the boarding and alighting procedure of the robot, when closing of the elevator door is disabled (door opening restriction) and operation of the elevator car is stopped, there is a problem of delaying a service for passengers boarding together with the robot or passengers waiting on another floor, thereby causing user inconvenience.

The present invention has been conceived to solve such problems in the art and it is an object of the present invention to provide a robot interlocking elevator control system that provides a detailed countermeasure against a failure mode in each step in the course of performing an elevator boarding/alighting procedure of a robot, thereby achieving significant improvement in overall service quality and operation efficiency of an elevator system controlled in conjunction with the robot without delay of a passenger service.

It will be understood that the present invention is not limited to the above object and other objects of the present invention will become apparent to those skilled in the art from the detailed description of embodiments.

### TECHNICAL SOLUTION

In accordance with one aspect of the present invention, there is provided a robot interlocking elevator control system including: an autonomous vehicle autonomously moving in a building; and an elevator controller controlling operation of an elevator installed in the building and an elevator door upon boarding/alighting of the autonomous vehicle with respect to the elevator through communication with the autonomous vehicle, wherein the autonomous vehicle sends a platform standby signal, an under-boarding signal, a boarding completion signal, an under-alighting signal and an alighting completion signal to the elevator controller according to step in performing boarding or alighting operation with respect to the elevator, and the elevator controller selects, as an opening standby time of the elevator door, any one of a general opening standby time set for shared use of the elevator by both human passengers and robots and a robot opening standby time set for exclusive use of the elevator by the robots, and determines whether disablement of a door close button of the elevator is to be set or released, depending on reception of a signal sent from the autonomous vehicle and whether the elevator allocated to the autonomous vehicle is set to a shared mode allowing shared use of the elevator by human passengers and robots or a robot exclusive mode allowing exclusive use of the elevator by the robots.

In accordance with another aspect of the present invention, there is provided a robot interlocking elevator control method a robot interlocking elevator control system including: an autonomous vehicle autonomously moving in a building; and an elevator controller controlling operation of elevators installed in the building and an elevator door upon boarding/alighting of the autonomous vehicle with respect to the elevator through communication with the autonomous vehicle, the robot interlocking elevator control method including: remotely calling, by the autonomous vehicle, an elevator; allocating, by the elevator controller, an elevator to the autonomous vehicle; sending, by the autonomous vehicle, a platform standby signal to the elevator controller after arrival at a platform for the allocated elevator; opening, by the elevator controller, a door of the allocated elevator, followed by sending a boarding permission signal to the autonomous vehicle; starting, by the autonomous vehicle, boarding operation with respect to the allocated elevator in response to the boarding permission signal while sending an under-boarding signal to the elevator controller during the boarding operation; sending, by the autonomous vehicle, a boarding completion signal to the elevator controller upon completion of the boarding operation with respect to the allocated elevator; controlling, by the elevator controller, the allocated elevator receiving the autonomous vehicle through the boarding operation of the autonomous vehicle to move to a departure floor of the autonomous vehicle; opening, by the elevator controller, the door of the allocated elevator upon arrival of the allocated elevator at the departure floor, followed by sending an alighting permission signal to the autonomous vehicle; starting, by the autonomous vehicle, alighting operation with respect to the allocated elevator in response to the alighting permission signal while sending an under-alighting signal to the elevator controller during the alighting operation; and sending, by the autonomous vehicle, an alighting completion signal to the elevator controller upon completion of the alighting operation with respect to the allocated elevator, wherein the elevator controller selects, as an opening standby time of the elevator door, any one of a general opening standby time set for shared use of the elevator by both human passengers and robots and a robot opening standby time set for exclusive use of the elevator by the robots and determines whether disablement of a door close button of the elevator is to be set or released, depending on reception of a signal sent from the autonomous vehicle in the course of performing a series of the steps and depending on whether the elevator allocated to the autonomous vehicle is set to a shared mode allowing shared use of the elevator by human passengers and robots or a robot exclusive mode allowing exclusive use of the elevator by the robots.

In the elevator control method, upon occurrence of a first failure mode in which the elevator controller does not receive the platform standby signal from the autonomous vehicle despite arrival of the allocated elevator at the platform, the elevator controller may select the general opening standby time as the door opening standby time and may release disablement of the door close button, when the allocated elevator is set to the shared mode, and the elevator controller may select the robot opening standby time as the door opening standby time, may disable the door close button during the robot opening standby time and may release disablement of the door close button after the robot opening standby time has elapsed, when the allocated elevator is set to the robot exclusive mode.

In the elevator control method, upon occurrence of a second failure mode in which the elevator controller does not receive the boarding permission signal from the autonomous vehicle due to standby of the autonomous vehicle on the platform despite transmission of the boarding permission signal to the autonomous vehicle, the elevator controller may select the robot opening standby time as the door opening standby time, may disable the door close button during the robot opening standby time and may release disablement of the door close button to close the elevator door after the robot opening standby time has elapsed, when the allocated elevator is set to the shared mode, and the elevator controller may select the robot opening standby time as the door opening standby time, may disable the door close button during the robot opening standby time, and may release disablement of the door close button after the robot opening standby time has elapsed, when the allocated elevator is set to the robot exclusive mode.

In the elevator control method, upon occurrence of a third failure mode in which the elevator controller does not receive the boarding completion signal from the autonomous vehicle after reception of the under-boarding signal from the autonomous vehicle, the elevator controller may select the robot opening standby time as the door opening standby time, may disable the door close button during the robot opening standby time and may release disablement of the door close button after the robot opening standby time has elapsed, when the allocated elevator is set to the shared mode, and the elevator controller may select the robot opening standby time as the door opening standby time and may disable the door close button during the robot opening standby time, when the allocated elevator is set to the robot exclusive mode.

Upon occurrence of the third failure mode, when the allocated elevator is set to the shared mode, the elevator door may be closed through manipulation of the door close button or under conditions that an object is not detected in a door zone of the elevator, instead of being automatically closed, despite disablement of the door close button due to lapse of the robot opening standby time, and, when the allocated elevator is set to the robot exclusive mode, disablement of the door close button may be released only by a specific command from a robot management system adapted to manage the autonomous vehicle, even when the robot opening standby time has elapsed.

In the elevator control method, upon occurrence of a fourth failure mode in which the elevator controller does not receive the under-alighting signal from the autonomous vehicle despite arrival of the allocated elevator at the platform and transmission of the alighting permission signal to the autonomous vehicle after completion of the boarding operation of the autonomous vehicle with respect to the allocated elevator, the elevator controller may select the robot opening standby time as the door opening standby time, may disable the door close button during the robot opening standby time, and may release disablement of the door close button to close the elevator door after the robot opening standby time has elapsed, when the allocated elevator is set to the shared mode, and the elevator controller may select the robot opening standby time as the door opening standby time, may disable the door close button during the robot opening standby time and may release disablement of the door close button after the robot opening standby time has elapsed, when the allocated elevator is set to the robot exclusive mode.

In the elevator control method, upon occurrence of a fifth failure mode in which the elevator controller does not receive the alighting completion signal from the autonomous vehicle after reception of the under-alighting signal from the autonomous vehicle, the elevator controller may select the robot opening standby time as the door opening standby time, may disable the door close button during the robot opening standby time and may release disablement of the door close button after the robot opening standby time has elapsed, when the allocated elevator is set to the shared mode, and the elevator controller may select the robot opening standby time as the door opening standby time and may disable the door close button during the robot opening standby time, when the allocated elevator is set to the robot exclusive mode.

Upon occurrence of the fifth failure mode, when the allocated elevator is set to the shared mode, the elevator door may be closed through manipulation of the door close button or under conditions that an object is not detected in a door zone of the elevator, instead of being automatically closed, despite disablement of the door close button due to lapse of the robot opening standby time, and, when the allocated elevator is set to the robot exclusive mode, disablement of the door close button may be released only by a specific command from the robot management system adapted to manage the autonomous vehicle, even when the robot opening standby time has elapsed.

### ADVANTAGEOUS EFFECTS

The robot interlocking elevator control system according to the present invention provides detailed countermeasures against failure modes in each step in the course of performing an elevator boarding/alighting procedure of the robot, thereby achieving significant improvement in overall service quality and operation efficiency of an elevator system controlled in conjunction with the robot without delay of a passenger service.

The present invention is not limited thereto and other effects of the present invention will become apparent from the following description.

### BRIEF DESCRIPTION OF THE DRAWINGS

FIG. 1 is a schematic block diagram of a robot interlocking elevator control system according to the present invention; and
FIG. 2 is a view illustrating a process in which an autonomous vehicle according to the present invention uses an elevator for movement between floors in a building.
FIG. 3 shows an elevator door and DCB control method of a robot interlocking elevator control system of the present invention when a first failure mode occurs.
FIG. 4 shows an elevator door and DCB control method of a robot interlocking elevator control system of the present invention when a second failure mode occurs.
FIG. 5 shows an elevator door and DCB control method of a robot interlocking elevator control system of the present invention when a third failure mode occurs.
FIG. 6 shows an elevator door and DCB control method of a robot interlocking elevator control system of the present invention when a fourth failure mode occurs.
FIG. 7 shows an elevator door and DCB control method of a robot interlocking elevator control system of the present invention when a fifth failure mode occurs.

### DETAILED DESCRIPTION OF EMBODIMENTS

Hereinafter, exemplary embodiments of the present invention will be described in detail with reference to the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Moreover, the singular forms, "a," "an," and "the" are intended to include the plural forms as well, unless the context clearly indicates otherwise.

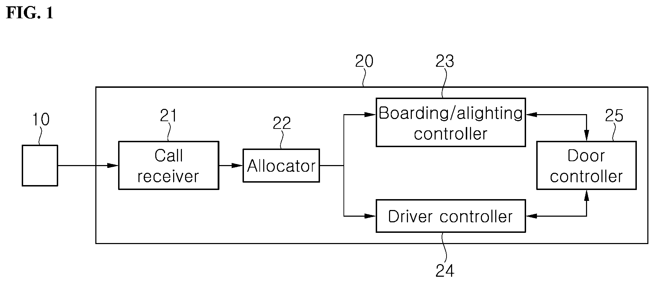

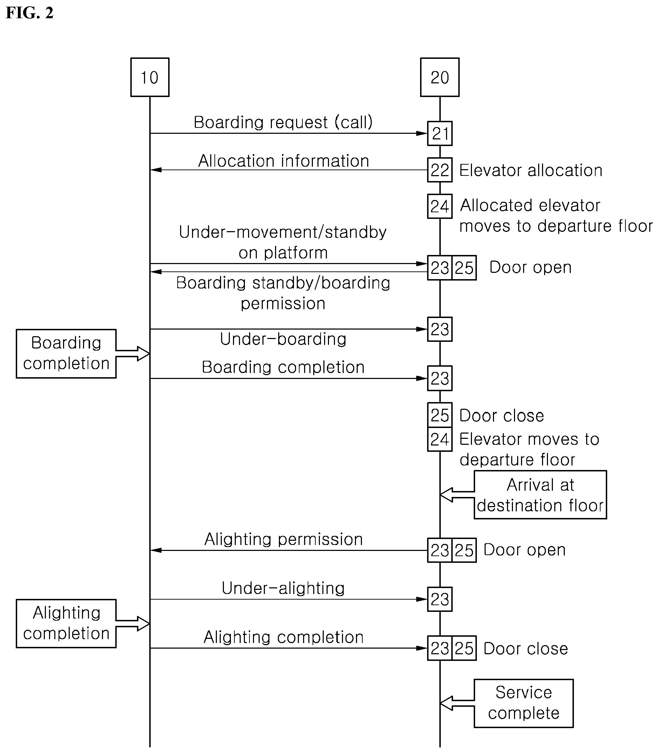

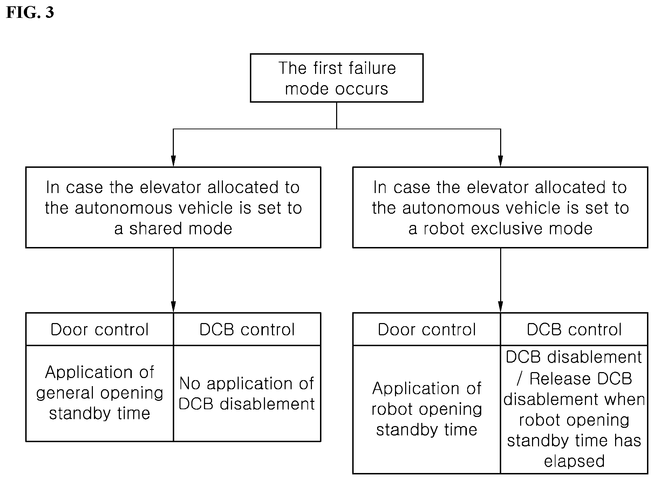

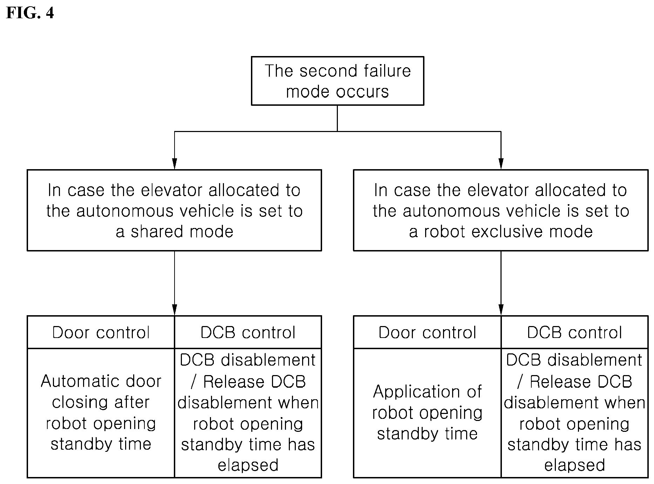

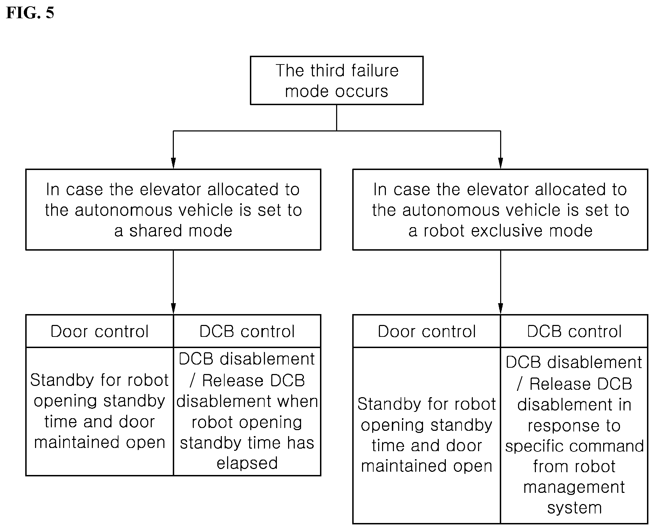

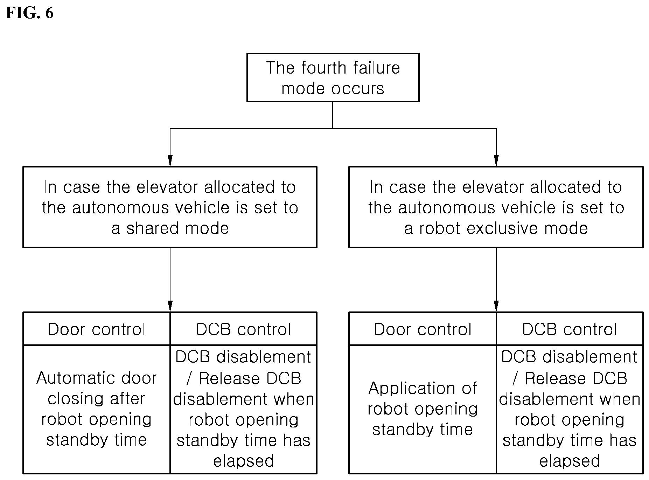

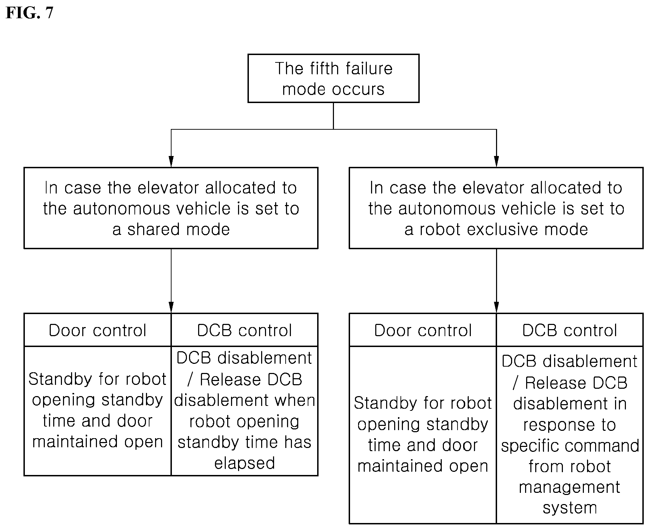

FIG. 1 is a schematic block diagram of a robot interlocking elevator control system according to the present invention and FIG. 2 is a view illustrating a process in which an autonomous vehicle according to the present invention uses an elevator for movement between floors in a building. FIG. 3 to 7 show elevator door and DCB control methods of a robot interlocking elevator control system of the present invention when a first to fifth failure mode occurs.

Referring to FIG. 1, the robot interlocking elevator control system according to the present invention includes an autonomous vehicle 10 autonomously moving in a building and an elevator controller 20 controlling operation of an elevator disposed inside the building through communication with the autonomous vehicle 10 to perform interlocking control of the autonomous vehicle 10 and the elevator.

Herein, the autonomous vehicle 10 collectively refers to all kinds of mobile devices including robots and capable of autonomously moving without human manipulation in a building. By way of example, the autonomous vehicle 10 may be a service robot that carries out tasks, such as transport including parcel delivery, cleaning, and customer guidance, and the like, and may be interlinked with a building management system (not shown) in a building to provide services for passengers in the building.

The autonomous vehicle 10 may communicate with the elevator controller 20 that controls operation of the elevator and movement of the autonomous vehicle 10 between floors in the building may be implemented through interlocking control of the elevator controller 20. The autonomous vehicle 10 may send and receive signals, which relate to elevator call, destination floor registration, and boarding/alighting operations, to and from the elevator controller 20, and details of corresponding operations will be described below.

Communication between the autonomous vehicle 10, the elevator controller 20 and the building management system may be implemented through wired or wireless communication, such as Bluetooth, Wi-Fi, CAN, WAN, and the like.

The autonomous vehicle 10 may recognize a space within a building through simultaneous localization and mapping (SLAM) based on information collected using a Lidar, a short-distance sensor, an ultrasonic sensor and a camera, and may move autonomously therein.

In addition, the autonomous vehicle 10 may store information regarding an internal/external structure of the building and a location of the elevator in the building through a database thereof, and may calculate an optimal distance and a movement route from a current location to the elevator calculated in real time using an internal algorithm based on a self-location estimation technique.

The elevator controller 20 controls overall operation and movement of the elevator. The elevator controller 20 may allocate an optimal elevator car in response to a call from each floor in the building, including button input by a passenger, a remote call, or a call received by the autonomous vehicle 10, and may control the allocated elevator car to move to the floor where the corresponding call is sent.

The elevator controller 20 may include a call receiver 21 receiving an elevator call signal generated by a passenger or the autonomous vehicle 10; an allocator 22 selecting an optimal elevator among multiple elevator cars in the building to allocate the optimal elevator in response to the elevator call signal; a boarding/alighting controller 23 controlling boarding/alighting operation of the autonomous vehicle 10 with respect to the elevator car; and a drive controller 24 controlling operation of the elevator car.

Although the elevator controller 20 may provide a service of allocating and moving an optimal elevator car in response to button input by a passenger or a remote call, this operation can be realized using a technique well-known in the art. Thus, the following description will focus on control related to the autonomous vehicle 10.

The call receiver 21 may receive an elevator boarding request from the autonomous vehicle 10. Information included in the elevator boarding request may further include departure floor information regarding a current location of the autonomous vehicle 10, destination floor information regarding a destination floor of the autonomous vehicle 10, information regarding a movement time of the autonomous vehicle 10 for arrival at an elevator platform, information regarding the weight, volume and purpose of use of the elevator, and the like.

Upon reception of an elevator boarding request from the autonomous vehicle 10, the allocator 22 may determine and allocate the most efficient elevator car through correlation analysis of a traffic volume and information regarding the locations of multiple available elevator cars and the autonomous vehicle 10 within the building.

More specifically, the allocator 22 may detect status information regarding occupancy or remaining capacity of multiple elevator cars operating in the building, and may extract available elevator cars allowing the autonomous vehicle 10 to board based on the weight, volume and the like of the autonomous vehicle 10 included in the elevator boarding request information received from the autonomous vehicle 10.

In addition, the allocator 22 may allocate an optimal elevator car in consideration of the locations of the extracted available elevator cars and the autonomous vehicle 10. Here, not only information regarding a call floor on which the autonomous vehicle 10 requests elevator boarding but also information regarding a movement time of the autonomous vehicle 10 from a current location to the platform may also be considered in selection of the optimal elevator car.

In addition, the elevator controller 20 may further include an autonomous vehicle location collector (not shown) that traces the location of the autonomous vehicle 10 in the building in real time to calculate a movement time of the autonomous vehicle 10 from the current location to the platform based on a signal sent from the autonomous vehicle 10, instead of allowing the autonomous vehicle 10 to calculate location information thereof.

The boarding/alighting controller 23 may manage and control overall operation for the autonomous vehicle 10, which requests elevator boarding, to board or alight from the allocated elevator car.

First, for boarding operation of the autonomous vehicle 10, the boarding/alighting controller 23 may determine based on information sent from the autonomous vehicle 10 whether the autonomous vehicle 10 approaches an elevator platform and may send a boarding standby command or a boarding permission command to the autonomous vehicle 10 depending on arrival of the autonomous vehicle 10 and arrival of the allocated elevator car at the corresponding elevator platform.

For example, the autonomous vehicle 10 may send an under-movement signal to the boarding/alighting controller 23 in the course of moving towards the platform and may send an under-standby signal thereto to inform the boarding/alighting controller 23 of the autonomous vehicle 10 being in a standby state on the platform when the autonomous vehicle 10 has already reached the platform.

In addition, for alighting operation of the autonomous vehicle 10, the boarding/alighting controller 23 may instruct the autonomous vehicle 10 to alight from the elevator car when the autonomous vehicle 10 arrives at the destination floor after boarding of the autonomous vehicle 10 on the elevator car is completed.

Further, in order for the autonomous vehicle 10 to implement boarding/alighting operation with respect to the elevator car, the boarding/alighting controller 23 may be interlinked with the door controller 25 that controls opening/closing of a door of the elevator car stopped on a service floor and a door of the corresponding platform.

The drive controller 24 serves to control driving of the elevator car to move upwards or downwards in a hoistway formed in the building in the vertical direction and may control a hoist motor to start driving of the elevator car or a brake to stop the elevator car.

In addition, the drive controller 24 according to this embodiment may control operation of the elevator car by generating a command signal to control the allocated elevator car to move to a floor, on which the autonomous vehicle 10 is placed, or a command signal to control the elevator car receiving the autonomous vehicle 10 to move to the destination floor of the autonomous vehicle 10, in response to the elevator boarding request from the autonomous vehicle 10.

Hereinafter, referring to FIG. 2 to 7, a process of using the elevator for movement of the autonomous vehicle 10 between floors in the building will be sequentially described according to a series of processes.

The autonomous vehicle 10 may remotely call an elevator car through wired or wireless communication with the elevator controller 20. When there is a need for movement between floors in the building, the autonomous vehicle 10 may send a boarding request signal, which requests a call of the elevator car, to the elevator controller 20.

When the call receiver 21 of the elevator controller 20 receives the boarding request signal from the autonomous vehicle 10, the allocator 22 allocates an optimal elevator car among multiple available elevator cars based on the information included in the boarding request signal and the information regarding the locations of available elevator cars in the building. The allocator 22 may provide the allocated elevator car and platform information corresponding thereto to the autonomous vehicle 10.

In response to the platform information corresponding to the allocated elevator car, the autonomous vehicle 10 may move to the corresponding platform while periodically reporting a movement situation to the elevator controller 20. In addition, the autonomous vehicle 10 may send a standby signal indicating that the autonomous vehicle 10 is in a standby state on the platform, upon arrival at the corresponding platform.

The elevator controller 20 may detect whether the autonomous vehicle 10 arrives at the platform corresponding to the allocated elevator car. Here, arrival of the autonomous vehicle 10 at the platform may be determined based on the location information obtained by the autonomous vehicle 10 through the self-location estimation technique or the location information of the autonomous vehicle 10 collected through a separate autonomous vehicle location collector (not shown), as described above.

Depending on time for the autonomous vehicle 10 to arrive at a designated platform, the autonomous vehicle 10 may arrive at the platform earlier than the allocated elevator car, or the allocated elevator car may arrive at the platform earlier than the autonomous vehicle 10.

The boarding/alighting controller 23 of the elevator controller 20 may send a boarding standby signal and/or a boarding permission signal to the autonomous vehicle 10 depending on an arrival order of the autonomous vehicle 10 and the allocated elevator car.

More specifically, when the autonomous vehicle 10 arrives at the platform earlier than the allocated elevator car, the boarding/alighting controller 23 may send the boarding standby signal to the autonomous vehicle 10 and then may send the boarding permission signal to the autonomous vehicle 10 upon completion of door opening after arrival of the allocated elevator car at a departure floor (call floor).

On the contrary, when the allocated elevator car arrives at the platform earlier than the autonomous vehicle 10, the boarding/alighting controller 23 may send the boarding permission signal to the autonomous vehicle 10 after conversion of the elevator door into an open state in conjunction with the door controller 25. In this case, the doors of the elevator car and the platform may be controlled to be maintained in an open state until the autonomous vehicle 10 arrives at the platform.

In addition, when arrival of the autonomous vehicle 10 is delayed beyond a preset time for some reason, the elevator controller 20 may control the autonomous vehicle 10 to send a recall signal for reallocation of an optimal elevator by sending a call cancellation signal to cancel a current call of the autonomous vehicle 10.

In response to the boarding permission signal from the boarding/alighting controller 23, the autonomous vehicle 10 performs boarding operation with respect to the allocated elevator car. The autonomous vehicle 10 may inform the boarding/alighting controller 23 of the autonomous vehicle 10 being under boarding operation by continuously sending the under-boarding signal to the boarding/alighting controller 23 from a start time of the boarding operation to a completion time thereof. The boarding/alighting controller 23 may control the elevator door not to be closed in cooperation with the door controller 25 while the autonomous vehicle 10 passes through the elevator door.

When the boarding operation of the autonomous vehicle 10 with respect to the elevator car is completed, the autonomous vehicle 10 may send a boarding completion signal to the boarding/alighting controller 23.

In response to the boarding completion signal from the autonomous vehicle 10, the elevator controller 20 may close the elevator door and may automatically register the destination floor of the autonomous vehicle 10 to control the elevator car to move to destination floor of the autonomous vehicle 10.

When the elevator car arrives at the destination floor of the autonomous vehicle 10, the elevator controller 20 may open the doors of the elevator car and the platform of the destination floor and may send an alighting permission signal to the autonomous vehicle 10 through the boarding/alighting controller 23 to instruct the autonomous vehicle 10 to alight from the elevator car.

In response to the alighting permission signal, the autonomous vehicle 10 performs alighting operation with respect to the elevator car. Here, the autonomous vehicle 10 may inform the boarding/alighting controller 23 of the autonomous vehicle 10 being under alighting operation by continuously sending the under-alighting signal to the boarding/alighting controller 23 from a start time of the alighting operation to a completion time thereof, and the boarding/alighting controller 23 may control the elevator door so as not to be closed in cooperation with the door controller 25 while the autonomous vehicle 10 passes through the elevator door.

When the alighting operation of the autonomous vehicle 10 with respect to the elevator car is completed, the autonomous vehicle 10 may send an alighting completion signal to the boarding/alighting controller 23.

In response to the alighting completion signal from the autonomous vehicle 10, the elevator controller 20 may close the door of the elevator and may complete an inter-floor movement service for the autonomous vehicle 10.

On the other hand, in the course of performing the aforementioned series of processes, various failure modes relating to boarding and alighting of the autonomous vehicle 10 can occur as follows. The present invention defines the failure modes occurring in each step and provides countermeasures against these failure modes.

Representative examples of failure modes that occur in each step include five cases as follows.

Case 1: A case where a platform standby state of the autonomous vehicle 10 is not recognized, that is, a case where the elevator controller 20 does not receive a platform standby signal from the autonomous vehicle 10, when the elevator car arrives at a call floor in response to an elevator call from the autonomous vehicle 10.

Case 2: A case where boarding operation of the autonomous vehicle 10 is not started for a predetermined period of time or more, that is, a case where the elevator controller 20 does not receive an under-boarding signal from the autonomous vehicle 10, after arrival of the elevator car at a call floor in response to an elevator call from the autonomous vehicle 10.

Case 3: A case where boarding completion of the autonomous vehicle 10 is not recognized as the next step, that is, a case where the elevator controller 20 does not receive a boarding completion signal from the autonomous vehicle 10, despite recognition of an under-boarding state of the autonomous vehicle 10 with respect to the elevator car.

Case 4: A case where alighting operation of the autonomous vehicle 10 is not started for a predetermined period of time or more, that is, a case where the elevator controller 20 does not receive an under-alighting signal from the autonomous vehicle 10, despite arrival of the elevator car receiving the autonomous vehicle 10 at a destination floor.

Case 5: A case where alighting completion of the autonomous vehicle 10 is not recognized, that is, a case where the elevator controller 20 does not receive an alighting completion signal from the autonomous vehicle 10, despite recognition of an under-alighting state of the autonomous vehicle 10 with respect to the elevator car.

On the other hand, since the failure modes in each step occur after the corresponding step proceeds, it can be presumed that the previous steps have been successfully carried out. Accordingly, the above five cases may be defined as follows.

Case 1: A case where the elevator controller 20 does not receive a platform standby signal from the autonomous vehicle 10, despite arrival of the elevator car at a departure floor in response to a boarding request (call) from the autonomous vehicle 10.

Case 2: A case where the elevator controller 20 does not receive an under-boarding signal from the autonomous vehicle 10, despite reception of the platform standby signal from the autonomous vehicle 10 and transmission of a boarding permission signal to the autonomous vehicle 10.

Case 3: A case where the elevator controller 20 does not receive a boarding completion signal from the autonomous vehicle 10, despite reception of the under-boarding signal therefrom.

Case 4: A case where the elevator controller 20 does not receive an under-alighting signal from the autonomous vehicle 10, despite arrival of the elevator car receiving the autonomous vehicle 10 at the destination floor after reception of the boarding completion signal from the autonomous vehicle 10.

Case 5: A case where the elevator controller 20 does not receive an alighting completion signal from the autonomous vehicle 10 despite reception of the under-alighting signal therefrom.

Next, the countermeasures against the failure modes in each step will be described in more detail. Here, the following countermeasures may be changed depending upon whether an elevator to be used by the autonomous vehicle 10 is set to a shared mode allowing shared use of the elevator by both robots and humans or a robot exclusive mode allowing use of the elevator only by robots.

That is, according to the present invention, the countermeasures against the failure modes in each step are separately established according to a setting mode of the elevator. Hereinafter, control logics corresponding to the countermeasures upon occurrence of the failure modes in each case will be described according to the setting mode of the elevator.

On the other hand, the robot interlocking elevator control system according to the present invention may set a predetermined time as an opening standby time of the elevator door. Here, the opening standby time of the elevator door means a period of time for which the door stands by in an open state. That is, the opening standby time may mean a period of time from a time at which the elevator door is completely open to a time immediately before the elevator door starts to be closed excluding a time for operation of opening or closing the elevator door.

More particularly, the robot interlocking elevator control system according to the present invention may set the opening standby time of the elevator door selected from among two values, that is, a general opening standby time for boarding/alighting of general passengers (human passengers) and a robot opening standby time for boarding/alighting of the autonomous vehicle (robot).

The general opening standby time is a typical setting value applied to opening/closing of the elevator door in the case where use of the elevator by the autonomous vehicle 10 is not scheduled. In application of the general opening standby time, the elevator door may be maintained in a completely open state for a short period of time (for example, for about 2 to 4 seconds) and may be converted to a closed state.

The robot opening standby time is a setting value applied to opening/closing of the elevator door upon boarding/alighting of the autonomous vehicle 10 through the elevator door and may be set to a longer time (for example, 40 seconds) than the general opening standby time. The general opening standby time and the opening standby time are arbitrary set values that can be changed depending upon entrance conditions of the elevator door and the like.

In addition, the elevator door to which the general opening standby time and the robot opening standby time are applied may be understood as a concept including both an elevator car door and a platform door, and setting of the door opening time and the door closing time and opening/closing of the elevator door may be controlled by the door controller 25, as described above.

Hereinafter, countermeasures against each of the cases corresponding to the failure modes will be described.

### [Case 1] When platform standby signal of autonomous vehicle is not received

### (1) Operation in normal state

First, operation in a normal state will be briefly described for comparison with operation in a failure mode. In a normal state where the autonomous vehicle 10 stands by on the platform upon arrival of an allocated elevator car at a call floor of the autonomous vehicle 10, the elevator controller 20 sets the opening time of the elevator door to the robot opening standby time and disables the door close button of the elevator for boarding operation of the autonomous vehicle 10 with respect to the allocated elevator car.

If the elevator controller receives an under-movement signal from the autonomous vehicle 10 instead of the platform standby signal, the elevator controller can control the autonomous vehicle 10 to start the boarding procedure after standby for a predetermined time. Thus, so long as an arrival time of the autonomous vehicle 10 does not exceed a predetermined threshold value, the elevator controller may disable the door close button and may control the elevator door to stand by in an open state until arrival of the autonomous vehicle 10. In this case, the robot opening standby time is counted from an arrival time of the autonomous vehicle 10 at the platform.

### (2) Countermeasure in shared mode

On the other hand, when the elevator controller does not receive the platform standby signal from the autonomous vehicle 10 upon arrival of the allocated elevator car at the call floor of the autonomous vehicle 10, the elevator controller may set the opening time of the elevator door to the general opening standby time or may convert the robot opening standby time, if previously set, into the general opening standby time and may release disablement of the door close button. Accordingly, it is possible for a general passenger to start the elevator car to move from a stopped floor after closing the corresponding elevator door by pressing the door close button.

When the elevator car not receiving the autonomous vehicle 10 starts to move after closing the elevator door, the elevator controller 20 sends a service cancellation signal to the corresponding autonomous vehicle 10 to instruct the autonomous vehicle to send a recall signal through cancellation of a current call of the autonomous vehicle 10.

The elevator car starting to move without the autonomous vehicle 10 therein does not move to the departure floor of the autonomous vehicle 10 due to cancellation of the service for the autonomous vehicle 10. In addition, even in the event where the elevator car arrives at the departure floor of the autonomous vehicle 10 due to another call, the general opening standby time may be applied instead of the robot opening standby time upon opening/closing of the elevator door.

Even in the event where the elevator door is opened again in response to button input by a passenger on a door open button in the elevator car or a platform button on the corresponding floor in the course of closing the elevator door, the general opening standby time may be applied upon opening/closing of the elevator door.

### (3) Countermeasure in robot exclusive mode

Since the elevator car does need to consider a service standby time for other human passengers in the robot exclusive mode, the elevator door is opened and maintained in an open state until the robot opening standby time elapses, upon arrival of the allocated elevator car at a call floor in response to an elevator call from the autonomous vehicle 10.

That is, in the robot exclusive mode, the door close button may be disabled and the elevator door may be maintained open as long as the robot opening standby time even without recognition of a standby state of the autonomous vehicle 10 on the platform. After the robot opening standby time has elapsed, disablement of the door close button may be released and the elevator controller may wait for a call service from another autonomous vehicle.

More specifically, after the robot opening standby time has elapsed, disablement of the door close button may be released while the elevator door is stood by in an open state until a service call is sent from the autonomous vehicle 10 on another floor. Thereafter, in response to the service call from the autonomous vehicle 10 on the other floor, the elevator controller may cancel a current service for the autonomous vehicle 10 on a current floor (that is, a currently requested service) and may control the elevator car to move to the other floor for a service for the autonomous vehicle 10 on the other floor after closing the elevator door.

### [Case 2] When under-boarding signal is not received

### (1) Operation in normal state

In a normal state in which the elevator controller 20 normally receives the under-boarding signal from the autonomous vehicle 10, the elevator controller 20 maintains the elevator door in an open state and disables the door close button during the robot opening standby time. Immediately after or as soon as the elevator door is opened, the elevator controller 20 may send a boarding permission signal to the autonomous vehicle 10 to induce boarding of the autonomous vehicle 10.

### (2) Countermeasure in shared mode

Conversely, although the elevator controller 20 opens the elevator door and sends the boarding permission signal to the autonomous vehicle 10 due to detection of the autonomous vehicle 10 standing by on the platform, there can be a case where the elevator controller does not receive the under-boarding signal from the autonomous vehicle 10 for a predetermined period of time. In this case, the elevator controller 20 may open the elevator door to stand by and may control the elevator car to start to move to another floor for a service for the autonomous vehicle 10 on the other floor after closing the elevator door when the robot opening standby time has elapsed.

This operation serves to prevent inconvenience caused by a service delay to other passengers and the elevator controller 20 may release disablement of the door close button as soon as the robot opening standby time elapses.

### (3) Countermeasure in robot exclusive mode

The countermeasure in this mode may be carried in a similar way to that in Case 1. Since the elevator car does need to consider a service standby time for other human passengers in the robot exclusive mode, the elevator door may be maintained in an open state and the door close button may be disabled even without reception of the under-boarding signal from the autonomous vehicle 10 until the robot opening standby time elapses.

After the robot opening standby time has elapsed, the elevator controller may release disablement of the door close button and may wait for another service call from the autonomous vehicle 10.

### [Case 3] When boarding completion signal is not received

### (1) Operation in normal state

Since reception of the boarding completion signal after reception of the under-boarding signal from the autonomous vehicle 10 means that boarding of the autonomous vehicle 10 on the elevator car has been successfully carried out, the elevator controller 20 may close the elevator door and may control the elevator car to move to a destination floor of the autonomous vehicle 10.

### (2) Countermeasure in shared mode

Upon reception of the under-boarding signal from the autonomous vehicle 10, the elevator controller 20 disables the door close button and maintains the elevator door in an open state. However, despite occurrence of a problem in boarding operation of the autonomous vehicle 10, when the elevator car is stood by in this state until the elevator controller receives the boarding completion signal from the autonomous vehicle 10, another passenger can be significantly inconvenienced.

Thus, when the elevator controller does not receive the boarding completion signal from the autonomous vehicle 10 for a predetermined period of time, preferably for the robot opening standby time, after reception of the under-boarding signal from the autonomous vehicle 10, the elevator controller may release disablement of the door close button to allow the elevator door to be closed when the door close button is pressed by a general passenger.

However, in this case, since the under-boarding signal of the autonomous vehicle 10 is received, there is a high probability that the autonomous vehicle 10 is present in the elevator door zone. Thus, the elevator controller prevents the elevator door from being automatically closed for a predetermined period of time or even when the robot opening standby time has elapsed.

Although the elevator door cannot be automatically closed, disablement of the door close button is released. Thus, the elevator controller may check whether another passenger using the corresponding elevator can close the elevator door and may control the elevator car to start to move to another floor by closing the elevator door through manipulation of the door close button upon determining that the other passenger can close the elevator door.

In addition, when it is determined through a detection unit (for example, a camera or an object detection sensor) in the elevator door zone that the autonomous vehicle 10 is not present in the elevator door zone, the elevator controller 20 may directly close the elevator door.

### (3) Countermeasure in robot exclusive mode

In the robot exclusive mode, the elevator controller 20 disables the door close button and maintains the elevator door in an open state in response to the under-boarding signal from the autonomous vehicle 10.

However, since the robot exclusive mode is a mode in which use of the elevator is allowed only for the autonomous vehicle 10, the elevator controller may maintain the elevator door in an open state while maintaining disablement of the door close button, even without reception of the boarding completion signal from the autonomous vehicle 10 until a predetermined period of time elapses.

In this case, breakdown handling of the autonomous vehicle 10 may be performed, as needed, and, after completion of breakdown handling of the autonomous vehicle 10, the elevator controller 20 may release disablement of the door close button and may close the elevator door to move the elevator car to another floor in response to a specific command from the robot management system that manages the autonomous vehicle 10.

### [Case 4] When under-alighting signal is not received

### (1) Operation in normal state

When the elevator controller 20 opens the elevator door and sends an alighting permission signal after completion of elevator boarding of the autonomous vehicle 10 and arrival of the autonomous vehicle 10 at the departure floor, the autonomous vehicle 10 sends an under-alighting signal to the elevator controller 20 as soon as the alighting operation is started. In this case, the elevator controller 20 disables the door close button and maintains the elevator door in an open state for the robot opening standby time to allow the autonomous vehicle 10 to alight from the elevator car.

### (2) Countermeasure in shared mode

The countermeasure in this mode may be carried in a similar way to that in Case 2. Although the elevator controller 20 opens the elevator door and sends the alighting permission signal to the autonomous vehicle 10 due to arrival of the elevator car receiving the autonomous vehicle 10 at the departure floor, there can be a case where the elevator controller does not receive the under-alighting signal from the autonomous vehicle 10 for a predetermined period of time. In this case, the elevator controller 20 may open the elevator door to stand by and may control the elevator car to start to move to another floor for a service for another floor after closing the elevator door when the robot opening standby time has elapsed.

This operation serves to prevent inconvenience caused by a service delay to other passengers and the elevator controller 20 may release disablement of the door close button as soon as the robot opening standby time elapses.

### (3) Countermeasure in robot exclusive mode

The countermeasure in this mode may be carried in a similar way to that in Case 2. Since the elevator car does need to consider service standby time for other human passengers in the robot exclusive mode, the elevator door may be maintained in an open state and the door close button may be disabled even without reception of the under-alighting signal from the autonomous vehicle 10 until the robot opening standby time elapses.

After the robot opening standby time has elapsed, the elevator controller may release disablement of the door close button and may wait for another service call from the autonomous vehicle 10.

### [Case 5] When alighting completion signal is not received

### (1) Operation in normal state

Since reception of the alighting completion signal after reception of the under-alighting signal from the autonomous vehicle 10 means that alighting of the autonomous vehicle 10 from the elevator car has been successfully carried out, the elevator controller 20 may close the elevator door and may complete movement service of the autonomous vehicle 10 between floors.

### (2) Countermeasure in shared mode

The countermeasure in this mode may be carried out in a similar way to that in Case 3. Upon reception of the under-alighting signal from the autonomous vehicle 10, the elevator controller 20 disables the door close button and maintains the elevator door in an open state. In this case, however, despite occurrence of an alighting problem, when the elevator car is stood by until the elevator controller receives the alighting completion signal from the autonomous vehicle 10, another passenger can be significantly inconvenienced.

Accordingly, when the alighting completion signal of the autonomous vehicle 10 is not received for a predetermined period of time, preferably for the robot opening standby time, after reception of the under-alighting signal from the autonomous vehicle 10, the elevator controller releases disablement of the door close button to allow the elevator door to be closed when the door close button is pressed by a passenger.

However, in this case, since the under-alighting signal of the autonomous vehicle 10 is received, there is a high probability that the autonomous vehicle 10 is present in the elevator door zone. Thus, the elevator controller prevents the elevator door from being automatically closed for a predetermined period of time or even when the robot opening standby time has elapsed.

Although the elevator door cannot be automatically closed, disablement of the door close button is released. Thus, the elevator controller may check whether another passenger using the corresponding elevator can close the elevator door, and may control the elevator car to start to move to another floor by closing the elevator door through manipulation of the door close button upon determining that the other passenger can close the elevator door.

In addition, when it is determined through the detection unit (for example, a camera or an object detection sensor) in the elevator door zone that the autonomous vehicle 10 is not present in the elevator door zone, the elevator controller 20 may directly close the elevator door.

### (3) Countermeasure in robot exclusive mode

The countermeasure in this mode may be carried out in a similar way to that in Case 3. In the robot exclusive mode, upon reception of the under-alighting signal from the autonomous vehicle 10, the elevator controller 20 disables the door close button and maintains the elevator door in an open state.

However, since the robot exclusive mode is a mode in which use of the elevator is allowed only for the autonomous vehicle 10, the elevator controller may maintain the elevator door in an open state while maintaining disablement of the door close button, even without reception of the alighting completion signal from the autonomous vehicle 10 until a predetermined period of time elapses.

In this case, breakdown handling of the autonomous vehicle 10 may be performed, as needed, and, after completion of breakdown handling of the autonomous vehicle 10, the elevator controller 20 may release disablement of the door close button and may close the elevator door to move the elevator car to another floor in response to a specific command from the robot management system that manages the autonomous vehicle 10.

The countermeasures according to the setting mode of the elevator may be summarized as in the following Table 1.

**Table 1**

| Case | Setting mode | Door control | DCB control |
|---|---|---|---|
| 1. No reception of boarding standby signal | Shared mode | Application of general opening standby time | No application of DCB disablement |
| | Robot exclusive mode | Application of robot opening standby time | DCB disablement for robot opening standby time |
| | | | Release DCB disablement when robot opening standby time has elapsed |
| 2. No reception of under-boarc ing signal | Shared mode | Automatic door closing after robot opening standby time | DCB disablement for robot opening standby time |
| | | | Release DCB disablement when robot opening standby time has elapsed |
| | Robot exclusive mode | Application of robot opening standby time | DCB disablement for robot opening standby time |
| | | | Release DCB disablement when robot opening standby time has elapsed |
| 3. No reception of boarding completion signal | Shared mode | Standby for robot opening standby time and door maintained open | DCB disablement for robot opening standby time |
| | | | Release DCB disablement when robot opening standby time has elapsed |
| | Robot exclusive mode | Standby for robot opening standby time and door maintained open | DCB disablement |
| | | | Release DCB disablement in response to specific command from robot management system |
| 4. No reception of under-alighting signal | Shared mode | Automatic door closing after robot opening standby time | DCB disablement for robot opening standby time |
| | | | Release DCB disablement when robot opening standby time has elapsed |
| | Robot exclusive mode | Application of robot opening standby time | DCB disablement for robot opening standby time |
| | | | Release DCB disablement when robot opening standby time has elapsed |
| 5. No reception of alighting completion signal | Shared mode | Standby for robot opening standby time and door maintained open | DCB disablement for robot opening standby time |
| | | | Release DCB disablement when robot opening standby time has elapsed |
| | Robot exclusive mode | Standby for robot opening standby time and door maintained open | DCB disablement |
| | | | Release DCB disablement in response to specific command from robot management system |

As described above, the robot interlocking elevator control system according to the present invention provides countermeasures of controlling the elevator door while releasing door opening restriction (releasing disablement of the door close button) under a predetermined condition upon occurrence of failure in the course of performing an elevator boarding/alighting procedure of the autonomous vehicle 10, thereby enabling efficient operation of the elevator without delay of an elevator passenger service.

The robot interlocking elevator control system according to the present invention may be implemented by a server corresponding to a computer or a program that processes signals received from the autonomous vehicle 10 and the elevator controller 20 and generate and output commands corresponding to the signals. In addition, the robot interlocking elevator control system may include a recording medium in which data is stored and recorded during the process, and examples of the recording medium include ROM, RAM, CD-ROM, a magnetic tape, a floppy disk, an optical data storage device, and the like.

Although some embodiments have been described herein, it should be understood that these embodiments are given by way of illustration only, and that various modifications, variations, and alterations can be made by those skilled in the art without departing from the scope of the present invention. Therefore, the scope of the invention should be limited only by the appended claims.

### <List of Reference Numerals>

10: Autonomous vehicle
20: Elevator controller
21: Call receiver
22: Allocator
23: Boarding/alighting controller
24: Drive controller
25: Door controller

## Claims

1. A robot interlocking elevator control system comprising:
an autonomous vehicle autonomously moving in a building; and
an elevator controller controlling operation of an elevator installed in the building and an elevator door upon boarding/alighting of the autonomous vehicle with respect to the elevator through communication with the autonomous vehicle,
**characterised in that**
the autonomous vehicle sends a platform standby signal, an under-boarding signal, a boarding completion signal, an under-alighting signal and an alighting completion signal to the elevator controller according to step in performing boarding or alighting operation with respect to the elevator, and
the elevator controller selects, as an opening standby time of the elevator door, any one of a general opening standby time set for shared use of the elevator by both human passengers and robots and a robot opening standby time set for exclusive use of the elevator by the robots, and determines whether disablement of a door close button of the elevator is to be set or released, depending on reception of a signal sent from the autonomous vehicle and whether the elevator allocated to the autonomous vehicle is set to a shared mode allowing shared use of the elevator by human passengers and robots or a robot exclusive mode allowing exclusive use of the elevator by the robots.

2. A robot interlocking elevator control method of a robot interlocking elevator control system including: an autonomous vehicle autonomously moving in a building; and an elevator controller controlling operation of elevators installed in the building and an elevator door upon boarding/alighting of the autonomous vehicle with respect to the elevator through communication with the autonomous vehicle, the robot interlocking elevator control method being **characterised by** comprising the steps of:
remotely calling, by the autonomous vehicle, an elevator;
allocating, by the elevator controller, an elevator to the autonomous vehicle;
sending, by the autonomous vehicle, a platform standby signal to the elevator controller after arrival at a platform for the allocated elevator;
opening, by the elevator controller, a door of the allocated elevator, followed by sending a boarding permission signal to the autonomous vehicle;
starting, by the autonomous vehicle, boarding operation with respect to the allocated elevator in response to the boarding permission signal while sending an under-boarding signal to the elevator controller during the boarding operation;
sending, by the autonomous vehicle, a boarding completion signal to the elevator controller upon completion of the boarding operation with respect to the allocated elevator;
controlling, by the elevator controller, the allocated elevator receiving the autonomous vehicle through the boarding operation of the autonomous vehicle to move to a departure floor of the autonomous vehicle;
opening, by the elevator controller, the door of the allocated elevator upon arrival of the allocated elevator at the departure floor, followed by sending an alighting permission signal to the autonomous vehicle;
starting, by the autonomous vehicle, alighting operation with respect to the allocated elevator in response to the alighting permission signal while sending an under-alighting signal to the elevator controller during the alighting operation; and
sending, by the autonomous vehicle, an alighting completion signal to the elevator controller upon completion of the alighting operation with respect to the allocated elevator,
wherein the elevator controller selects, as an opening standby time of the elevator door, any one of a general opening standby time set for shared use of the elevator by both human passengers and robots and a robot opening standby time set for exclusive use of the elevator by the robots and determines whether disablement of a door close button of the elevator is to be set or released, depending on reception of a signal sent from the autonomous vehicle in the course of performing a series of the steps and depending on whether the elevator allocated to the autonomous vehicle is set to a shared mode allowing shared use of the elevator by human passengers and robots or a robot exclusive mode allowing exclusive use of the elevator by the robots.

3. The robot interlocking elevator control method according to claim 2, wherein, upon occurrence of a first failure mode in which the elevator controller does not receive the platform standby signal from the autonomous vehicle despite arrival of the allocated elevator at the platform, the elevator controller selects the general opening standby time as the door opening standby time and releases disablement of the door close button, when the allocated elevator is set to the shared mode, and the elevator controller selects the robot opening standby time as the door opening standby time, disables the door close button during the robot opening standby time and releases disablement of the door close button after the robot opening standby time has elapsed, when the allocated elevator is set to the robot exclusive mode.

4. The robot interlocking elevator control method according to claim 2, wherein, upon occurrence of a second failure mode in which the elevator controller does not receive the boarding permission signal from the autonomous vehicle due to standby of the autonomous vehicle on the platform despite transmission of the boarding permission signal to the autonomous vehicle, the elevator controller selects the robot opening standby time as the door opening standby time, disables the door close button during the robot opening standby time and releases disablement of the door close button to close the elevator door after the robot opening standby time has elapsed, when the allocated elevator is set to the shared mode, and, the elevator controller selects the robot opening standby time as the door opening standby time, disables the door close button during the robot opening standby time and releases disablement of the door close button after the robot opening standby time has elapsed, when the allocated elevator is set to the robot exclusive mode.

5. The robot interlocking elevator control method according to claim 2, wherein, upon occurrence of a third failure mode in which the elevator controller does not receive the boarding completion signal from the autonomous vehicle after reception of the under-boarding signal from the autonomous vehicle, the elevator controller selects the robot opening standby time as the door opening standby time, disables the door close button during the robot opening standby time and releases disablement of the door close button after the robot opening standby time has elapsed, when the allocated elevator is set to the shared mode, and the elevator controller selects the robot opening standby time as the door opening standby time and disables the door close button during the robot opening standby time, when the allocated elevator is set to the robot exclusive mode.

6. The robot interlocking elevator control method according to claim 5, wherein, upon occurrence of the third failure mode, when the allocated elevator is set to the shared mode, the elevator door is closed through manipulation of the door close button or under conditions that an object is not detected in a door zone of the elevator, instead of being automatically closed, despite disablement of the door close button due to lapse of the robot opening standby time, and, when the allocated elevator is set to the robot exclusive mode, disablement of the door close button is released only by a specific command from a robot management system adapted to manage the autonomous vehicle, even when the robot opening standby time has elapsed.

7. The robot interlocking elevator control method according to claim 2, wherein, upon occurrence of a fourth failure mode in which the elevator controller does not receive the under-alighting signal from the autonomous vehicle despite arrival of the allocated elevator at the platform and transmission of the alighting permission signal to the autonomous vehicle after completion of the boarding operation of the autonomous vehicle with respect to the allocated elevator, the elevator controller selects the robot opening standby time as the door opening standby time, disables the door close button during the robot opening standby time, and releases disablement of the door close button to close the elevator door after the robot opening standby time has elapsed, when the allocated elevator is set to the shared mode, and the elevator controller selects the robot opening standby time as the door opening standby time, disables the door close button during the robot opening standby time and releases disablement of the door close button after the robot opening standby time has elapsed, when the allocated elevator is set to the robot exclusive mode.

8. The robot interlocking elevator control method according to claim 2, wherein, upon occurrence of a fifth failure mode in which the elevator controller does not receive the alighting completion signal from the autonomous vehicle after reception of the under-alighting signal from the autonomous vehicle, the elevator controller selects the robot opening standby time as the door opening standby time, disables the door close button during the robot opening standby time and releases disablement of the door close button after the robot opening standby time has elapsed, when the allocated elevator is set to the shared mode, and the elevator controller selects the robot opening standby time as the door opening standby time and disables the door close button during the robot opening standby time, when the allocated elevator is set to the robot exclusive mode.

9. The robot interlocking elevator control method according to claim 8, wherein, upon occurrence of the fifth failure mode, when the allocated elevator is set to the shared mode, the elevator door is closed through manipulation of the door close button or under conditions that an object is not detected in a door zone of the elevator, instead of being automatically closed, despite disablement of the door close button due to lapse of the robot opening standby time, and, when the allocated elevator is set to the robot exclusive mode, disablement of the door close button is released only by a specific command from the robot management system adapted to manage the autonomous vehicle, even when the robot opening standby time has elapsed.

## Patentansprüche

1. Aufzugssteuerungssystem mit Roboterbeteiligung, umfassend:
ein autonomes Fahrzeug, das sich autonom in einem Gebäude bewegt; und
eine Aufzugssteuerung, die einen Betrieb eines in dem Gebäude installierten Aufzugs und einer Aufzugstür beim Einsteigen/Aussteigen des autonomen Fahrzeugs in Bezug auf den Aufzug durch Kommunikation mit dem autonomen Fahrzeug steuert,
**dadurch gekennzeichnet, dass**
das autonome Fahrzeug ein Plattformbereitschaftssignal, ein Im-Einstieg-Signal, ein Einstiegsbeendigungssignal, ein Im-Ausstieg-Signal und ein Ausstiegsbeendigungssignal an die Aufzugssteuerung gemäß einem Schritt eines Durchführens eines Einstiegs- oder Ausstiegsvorgangs in Bezug auf den Aufzug sendet, und
die Aufzugssteuerung als Öffnungsbereitschaftszeit der Aufzugstür eine beliebige einer allgemeinen Öffnungsbereitschaftszeit, die für eine gemeinsame Nutzung des Aufzugs durch sowohl menschliche Fahrgäste als auch Roboter eingestellt ist, und einer Roboteröffnungsbereitschaftszeit, die für eine ausschließliche Nutzung des Aufzugs durch die Roboter eingestellt ist, auswählt und bestimmt, ob eine Deaktivierung einer Türschließtaste des Aufzugs eingestellt oder aufgehoben werden soll, abhängig vom Empfang eines vom autonomen Fahrzeug gesendeten Signals und davon, ob der Aufzug, der dem autonomen Fahrzeug zugeteilt ist, auf einen gemeinsamen Modus, der eine gemeinsame Nutzung des Aufzugs durch menschliche Fahrgäste und Roboter ermöglicht, oder auf einen roboterexklusiven Modus, der eine ausschließliche Nutzung des Aufzugs durch die Roboter ermöglicht, eingestellt ist.

2. Aufzugssteuerungsverfahren mit Roboterbeteiligung eines Aufzugssteuerungssystems mit Roboterbeteiligung, umfassend: ein autonomes Fahrzeug, das sich autonom in einem Gebäude bewegt; und eine Aufzugssteuerung, die einen Betrieb von in dem Gebäude installierten Aufzügen und einer Aufzugstür beim Einsteigen/Aussteigen des autonomen Fahrzeugs in Bezug auf den Aufzug durch Kommunikation mit dem autonomen Fahrzeug steuert, wobei das Aufzugssteuerungsverfahren mit Roboterbeteiligung **dadurch gekennzeichnet ist, dass** es die folgenden Schritte umfasst:
Fernrufen, durch das autonome Fahrzeug, eines Aufzugs;
Zuteilen, durch die Aufzugssteuerung, eines Aufzugs an das autonome Fahrzeug;
Senden, durch das autonome Fahrzeug, eines Plattformbereitschaftssignals an die Aufzugssteuerung nach Ankunft an einer Plattform für den zugeteilten Aufzug;
Öffnen, durch die Aufzugssteuerung, einer Tür des zugeteilten Aufzugs, gefolgt von einem Senden eines Einstiegserlaubnissignals an das autonome Fahrzeug;
Starten, durch das autonome Fahrzeug, eines Einstiegsvorgangs in Bezug auf den zugeteilten Aufzug ansprechend auf das Einstiegserlaubnissignal, wobei während des Einstiegsvorgangs ein Im-Einstieg-Signal an die Aufzugssteuerung gesendet wird;
Senden, durch das autonome Fahrzeug, eines Einstiegsbeendigungssignals an die Aufzugssteuerung nach Beendigung des Einstiegsvorgangs in Bezug auf den zugeteilten Aufzug;
Steuern, durch die Aufzugssteuerung, des zugeteilten Aufzugs, der das autonome Fahrzeug aufnimmt, durch den Einstiegsvorgang des autonomen Fahrzeugs, um ihn in ein Abfahrtsstockwerk des autonomen Fahrzeugs zu bewegen;
Öffnen, durch die Aufzugssteuerung, der Tür des zugeteilten Aufzugs bei Ankunft des zugeteilten Aufzugs in dem Abfahrtsstockwerk, gefolgt von einem Senden eines Ausstiegserlaubnissignals an das autonome Fahrzeug;
Starten, durch das autonome Fahrzeug, eines Ausstiegsvorgangs in Bezug auf den zugeteilten Aufzug ansprechend auf das Ausstiegserlaubnissignal, wobei während des Ausstiegsvorgangs ein Im-Ausstieg-Signal an die Aufzugssteuerung gesendet wird; und
Senden, durch das autonome Fahrzeug, eines Ausstiegsbeendigungssignals an die Aufzugssteuerung nach Beendigung des Ausstiegsvorgangs in Bezug auf den zugeteilten Aufzug,
wobei die Aufzugssteuerung als Öffnungsbereitschaftszeit der Aufzugstür eine beliebige einer allgemeinen Öffnungsbereitschaftszeit, die für eine gemeinsame Nutzung des Aufzugs durch sowohl menschliche Fahrgäste als auch Roboter eingestellt ist, und einer Roboteröffnungsbereitschaftszeit, die für eine ausschließliche Nutzung des Aufzugs durch die Roboter eingestellt ist, auswählt und bestimmt, ob eine Deaktivierung einer Türschließtaste des Aufzugs eingestellt oder aufgehoben werden soll, abhängig vom Empfang eines vom autonomen Fahrzeug gesendeten Signals im Zuge des Durchführens einer Reihe der Schritte und davon, ob der Aufzug, der dem autonomen Fahrzeug zugeteilt ist, auf einen gemeinsamen Modus, der eine gemeinsame Nutzung des Aufzugs durch menschliche Fahrgäste und Roboter ermöglicht, oder auf einen roboterexklusiven Modus, der eine ausschließliche Nutzung des Aufzugs durch die Roboter ermöglicht, eingestellt ist.

3. Aufzugssteuerungsverfahren mit Roboterbeteiligung nach Anspruch 2, wobei bei Auftreten eines ersten Fehlermodus, bei dem die Aufzugssteuerung trotz Ankunft des zugeteilten Aufzugs an der Plattform das Plattformbereitschaftssignal vom autonomen Fahrzeug nicht empfängt, die Aufzugssteuerung die allgemeine Öffnungsbereitschaftszeit als Türöffnungsbereitschaftszeit auswählt und eine Deaktivierung der Türschließtaste aufhebt, wenn der zugeteilte Aufzug auf den gemeinsamen Modus eingestellt ist, und die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, wenn der zugeteilte Aufzug auf den roboterexklusiven Modus eingestellt ist.

4. Aufzugssteuerungsverfahren mit Roboterbeteiligung nach Anspruch 2, wobei bei Auftreten eines zweiten Fehlermodus, bei dem die Aufzugssteuerung das Einstiegserlaubnissignal von dem autonomen Fahrzeug trotz Übertragung des Einstiegserlaubnissignals an das autonome Fahrzeug nicht empfängt, weil das autonome Fahrzeug auf der Plattform in Bereitschaft ist, die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, um die Aufzugstür zu schließen, wenn der zugeteilte Aufzug auf den gemeinsamen Modus eingestellt ist, und die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, wenn der zugeteilte Aufzug auf den roboterexklusiven Modus eingestellt ist.

5. Aufzugssteuerungsverfahren mit Roboterbeteiligung nach Anspruch 2, wobei bei Auftreten eines dritten Fehlermodus, bei dem die Aufzugssteuerung das Einstiegsbeendigungssignal von dem autonomen Fahrzeug nach Empfang des Im-Einstieg-Signals von dem autonomen Fahrzeug nicht empfängt, die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, wenn der zugeteilte Aufzug auf den gemeinsamen Modus eingestellt ist, und die Aufzugssteuerung die Roboteröffnungsbereitschaftszeit als Türöffnungsbereitschaftszeit auswählt und die Türschließtaste während der Roboteröffnungsbereitschaftszeit deaktiviert, wenn der zugeteilte Aufzug auf den roboterexklusiven Modus eingestellt ist.

6. Aufzugssteuerungsverfahren mit Roboterbeteiligung nach Anspruch 5, wobei bei Auftreten des dritten Fehlermodus, wenn der zugeteilte Aufzug auf den gemeinsamen Modus eingestellt ist, die Aufzugstür durch Betätigen der Türschließtaste oder unter der Bedingung, dass kein Objekt in einer Türzone des Aufzugs erfasst wird, geschlossen wird, anstatt automatisch geschlossen zu werden, trotz Deaktivierung der Türschließtaste aufgrund des Ablaufs der Roboteröffnungsbereitschaftszeit, und, wenn der zugeteilte Aufzug auf den roboterexklusiven Modus eingestellt ist, die Deaktivierung der Türschließtaste nur durch einen speziellen Befehl eines Roboterverwaltungssystems aufgehoben wird, das ausgestaltet ist, das autonome Fahrzeug zu verwalten, auch wenn die Roboteröffnungsbereitschaftszeit abgelaufen ist.

7. Aufzugssteuerungsverfahren mit Roboterbeteiligung nach Anspruch 2, wobei bei Auftreten eines vierten Fehlermodus, bei dem die Aufzugssteuerung trotz Ankunft des zugeteilten Aufzugs an der Plattform und Übertragung des Ausstiegserlaubnissignals an das autonome Fahrzeug nach Beendigung des Einstiegsvorgangs des autonomen Fahrzeugs in Bezug auf den zugeteilten Aufzug das Im-Ausstieg-Signal vom autonomen Fahrzeug nicht empfängt, die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, um die Aufzugstür zu schließen, wenn der zugeteilte Aufzug auf den gemeinsamen Modus eingestellt ist, und die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, wenn der zugeteilte Aufzug auf den roboterexklusiven Modus eingestellt ist.

8. Aufzugssteuerungsverfahren mit Roboterbeteiligung nach Anspruch 2, wobei bei Auftreten eines fünften Fehlermodus, bei dem die Aufzugssteuerung das Ausstiegsbeendigungssignal von dem autonomen Fahrzeug nach Empfang des Im-Ausstieg-Signals von dem autonomen Fahrzeug nicht empfängt, die Aufzugssteuerung die Roboteröffnungsbereitschaftszeit als Türöffnungsbereitschaftszeit auswählt, die Türschließtaste während der Roboteröffnungsbereitschaftszeit deaktiviert und die Deaktivierung der Türschließtaste nach Ablauf der Roboteröffnungsbereitschaftszeit aufhebt, wenn der zugeteilte Aufzug auf den gemeinsamen Modus eingestellt ist, und die Aufzugssteuerung die Roboteröffnungsbereitschaftszeit als Türöffnungsbereitschaftszeit auswählt und die Türschließtaste während der Roboteröffnungsbereitschaftszeit deaktiviert, wenn der zugeteilte Aufzug auf den roboterexklusiven Modus eingestellt ist.

9. Aufzugssteuerungsverfahren mit Roboterbeteiligung nach Anspruch 8, wobei bei Auftreten des fünften Fehlermodus, wenn der zugeteilte Aufzug auf den gemeinsamen Modus eingestellt ist, die Aufzugstür durch Betätigen der Türschließtaste oder unter der Bedingung, dass kein Objekt in einer Türzone des Aufzugs erfasst wird, geschlossen wird, anstatt automatisch geschlossen zu werden, trotz Deaktivierung der Türschließtaste aufgrund des Ablaufs der Roboteröffnungsbereitschaftszeit, und, wenn der zugeteilte Aufzug auf den roboterexklusiven Modus eingestellt ist, die Deaktivierung der Türschließtaste nur durch einen speziellen Befehl des Roboterverwaltungssystems aufgehoben wird, das ausgestaltet ist, das autonome Fahrzeug zu verwalten, auch wenn die Roboteröffnungsbereitschaftszeit abgelaufen ist.

## Revendications

1. Système de commande d'ascenseur à verrouillage de robot
comprenant :
un véhicule autonome se déplaçant de manière autonome dans un bâtiment ; et
un contrôleur d'ascenseur contrôlant le fonctionnement d'un ascenseur installé dans le bâtiment et une porte d'ascenseur lors de l'embarquement/débarquement du véhicule autonome par rapport à l'ascenseur par la communication avec le véhicule autonome,
**caractérisé en ce qu'**en fonction de l'étape de réalisation de l'opération d'embarquement ou de débarquement par rapport à l'ascenseur, le véhicule autonome envoie un signal en veille sur la plateforme, un signal d'embarquement en cours, un signal de fin d'embarquement, un signal de débarquement en cours et un signal de fin de débarquement au contrôleur de l'ascenseur, et
le contrôleur d'ascenseur sélectionne comme temps de veille d'ouverture de la porte de l'ascenseur, soit un temps de veille d'ouverture général pour l'utilisation partagée de l'ascenseur par des passagers humains et des robots, soit un temps de veille d'ouverture pour robots pour l'utilisation exclusive de l'ascenseur par les robots, et détermine si la désactivation d'un bouton de fermeture des portes de l'ascenseur doit être activée ou désactivée, en fonction de la réception d'un signal envoyé depuis le véhicule autonome et selon si l'ascenseur attribué au véhicule autonome est réglé sur un mode partagé permettant l'utilisation partagée de l'ascenseur par des passagers humains et des robots ou sur un mode exclusif aux robots permettant l'utilisation exclusive de l'ascenseur par les robots.

2. Méthode de commande d'ascenseur à verrouillage de robot d'un système de commande d'ascenseur à verrouillage de robot comprenant : un véhicule autonome se déplaçant de manière autonome dans un bâtiment, et un contrôleur d'ascenseur contrôlant le fonctionnement des ascenseurs installés dans le bâtiment et une porte d'ascenseur lors de l'embarquement/débarquement du véhicule autonome par rapport à l'ascenseur par communication avec le véhicule autonome, où la méthode de commande d'ascenseur par emboîtement robotisé est **caractérisée par** les étapes suivantes :
l'appel à distance d'un ascenseur par le véhicule autonome ;
l'attribution d'un ascenseur au véhicule autonome par le contrôleur d'ascenseur ;
l'envoi d'un signal en veille sur la plateforme par le véhicule autonome au contrôleur de l'ascenseur après son arrivée à une plateforme pour l'ascenseur attribué ;
l'ouverture, par le contrôleur de l'ascenseur, d'une porte de l'ascenseur attribué, suivie de l'envoi d'un signal d'autorisation d'embarquement au véhicule autonome ;
le démarrage de l'opération d'embarquement par le véhicule autonome, par rapport à l'ascenseur attribué, en réponse au signal d'autorisation d'embarquement tout en envoyant un signal d'embarquement en cours au contrôleur de l'ascenseur pendant l'opération d'embarquement ;
l'envoi par le véhicule autonome d'un signal de fin d'embarquement au contrôleur de l'ascenseur à l'issue de l'opération d'embarquement par rapport à l'ascenseur attribué ;
la commande de l'ascenseur accueillant le véhicule autonome attribué par le contrôleur d'ascenseur, tout au long de l'opération d'embarquement du véhicule autonome pour se déplacer vers un étage de départ du véhicule autonome ;
l'ouverture de la porte de l'ascenseur attribué par le contrôleur de l'ascenseur à l'arrivée de l'ascenseur attribué à l'étage de départ, suivi de l'envoi d'un signal d'autorisation de débarquement au véhicule autonome ;
le démarrage de l'opération de débarquement par le véhicule autonome, par rapport à l'ascenseur attribué en réponse au signal d'autorisation de débarquement tout en envoyant un signal de débarquement au contrôleur de l'ascenseur pendant l'opération de débarquement ; et
l'envoi, par le véhicule autonome, d'un signal de fin de débarquement au contrôleur de l'ascenseur à la fin de l'opération de débarquement par rapport à l'ascenseur attribué,
où le contrôleur d'ascenseur sélectionne comme temps de veille d'ouverture de la porte de l'ascenseur soit un temps de veille d'ouverture général pour l'utilisation partagée de l'ascenseur par les passagers humains et les robots, soit un temps de veille d'ouverture pour robots pour l'utilisation exclusive de l'ascenseur par les robots, et détermine si la désactivation d'un bouton de fermeture des portes de l'ascenseur doit être activée ou désactivée, en fonction de la réception d'un signal envoyé depuis le véhicule autonome dans le cadre de l'exécution d'une série d'étapes et selon si l'ascenseur attribué au véhicule autonome est réglé sur un mode partagé permettant l'utilisation partagée de l'ascenseur par des passagers humains et des robots ou sur un mode exclusif aux robots permettant l'utilisation exclusive de l'ascenseur par les robots.

3. La méthode de commande d'ascenseur à verrouillage de robot selon la revendication 2, où, lors de l'apparition d'un premier mode de défaillance dans lequel le contrôleur d'ascenseur ne reçoit pas le signal en veille sur la plateforme du véhicule autonome malgré l'arrivée de l'ascenseur attribué sur la plateforme, le contrôleur d'ascenseur sélectionne le temps de veille d'ouverture général comme temps de veille d'ouverture des portes et libère la désactivation du bouton de fermeture des portes, lorsque l'ascenseur attribué est réglé sur le mode partagé et le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes une fois le temps de veille d'ouverture pour robots écoulé, lorsque l'ascenseur attribué est réglé sur le mode exclusif pour robots.

4. La méthode de commande d'ascenseur à verrouillage de robot selon la revendication 2, où, lors de l'apparition d'un second mode de défaillance dans lequel le contrôleur d'ascenseur ne reçoit pas le signal d'autorisation d'embarquement du véhicule autonome en raison de la mise en veille du véhicule autonome sur la plateforme malgré la transmission du signal d'autorisation d'embarquement au véhicule autonome, le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes pour fermer la porte de l'ascenseur une fois le temps de veille d'ouverture pour robots écoulé, lorsque l'ascenseur attribué est réglé sur le mode partagé, et, le contrôleur de l'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes une fois le temps de veille d'ouverture pour robots écoulé, lorsque l'ascenseur attribué est réglé sur le mode exclusif pour robots.

5. La méthode de commande d'ascenseur à verrouillage de robot selon la revendication 2, où, lors de l'apparition d'un troisième mode de défaillance dans lequel le contrôleur d'ascenseur ne reçoit pas le signal de fin de l'embarquement du véhicule autonome après réception du signal d'embarquement inférieur du véhicule autonome, le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes une fois le temps de veille d'ouverture pour robots écoulé, lorsque l'ascenseur attribué est réglé sur le mode partagé, et que le contrôleur d'ascenseur sélectionne le temps de veille d'ouverture pour robots comme temps de veille d'ouverture des portes et désactive le bouton de fermeture des portes pendant le temps de veille d'ouverture pour robots, lorsque l'ascenseur attribué est réglé sur le mode exclusif pour robots.

6. La méthode de commande d'ascenseur à verrouillage de robot selon la revendication 5, où, lors de l'apparition du troisième mode de défaillance, lorsque l'ascenseur attribué est réglé sur le mode partagé, la porte de l'ascenseur est fermée par manipulation du bouton de fermeture des portes ou dans des conditions où un objet n'est pas détecté dans une zone de porte de l'ascenseur, au lieu d'être fermé automatiquement, malgré la désactivation du bouton de fermeture des portes en raison de l'écoulement du temps de veille d'ouverture pour robots, et, lorsque l'ascenseur attribué est réglé sur le mode exclusif au robot, la désactivation du bouton de fermeture des portes n'est déclenchée que par une commande spécifique d'un système de gestion de robot adapté à la gestion du véhicule autonome, même lorsque le temps de veille d'ouverture pour robots est écoulé.

7. La méthode de commande d'ascenseur à verrouillage de robot selon la revendication 2, où en cas d'apparition d'un quatrième mode de défaillance dans lequel le contrôleur d'ascenseur ne reçoit pas le signal de débarquement du véhicule autonome malgré l'arrivée de l'ascenseur attribué à la plateforme et la transmission du signal d'autorisation de débarquement au véhicule autonome après la fin de l'opération d'embarquement du véhicule autonome par rapport à l'ascenseur attribué, le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes pour fermer la porte de l'ascenseur une fois le temps de veille d'ouverture pour robots écoulé, lorsque l'ascenseur attribué est réglé sur le mode partagé, et le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes une fois le temps de veille d'ouverture pour robots écoulé, lorsque l'ascenseur attribué est réglé sur le mode exclusif pour robots.

8. La méthode de commande d'ascenseur à verrouillage de robot selon la revendication 2, où, lors de l'apparition d'un cinquième mode de défaillance dans lequel le contrôleur d'ascenseur ne reçoit pas le signal de fin de débarquement du véhicule autonome après réception du signal de débarquement du véhicule autonome, le contrôleur d'ascenseur sélectionne le temps de veille d'ouverture pour robots comme temps de veille d'ouverture des portes, désactive le bouton de fermeture des portes pendant le temps de veille d'ouverture pour robots et libère la désactivation du bouton de fermeture des portes une fois le temps de veille d'ouverture pour robots écoulé, lorsque l'ascenseur attribué est réglé sur le mode partagé, et que le contrôleur d'ascenseur sélectionne le temps de veille d'ouverture pour robots comme temps de veille d'ouverture des portes et désactive le bouton de fermeture des portes pendant le temps de veille d'ouverture pour robots, lorsque l'ascenseur attribué est réglé sur le mode exclusif pour robots.

9. La méthode de commande d'ascenseur à verrouillage de robot selon la revendication 8, où, lors de l'apparition du cinquième mode de défaillance, lorsque l'ascenseur attribué est réglé sur le mode partagé, la porte de l'ascenseur est fermée par manipulation du bouton de fermeture des portes ou dans des conditions où un objet n'est pas détecté dans une zone de porte de l'ascenseur, au lieu d'être fermé automatiquement, malgré la désactivation du bouton de fermeture des portes en raison de l'écoulement du temps de veille d'ouverture pour robots, et, lorsque l'ascenseur attribué est réglé sur le mode exclusif pour robots, la désactivation du bouton de fermeture des portes n'est déclenchée que par une commande spécifique du système de gestion du robot adapté à la gestion du véhicule autonome, même lorsque le temps de veille d'ouverture pour robots est écoulé.
